# EUROPÄISCHE PATENTSCHRIFT

(11) **EP 2 482 041 B1**
(45) Veröffentlichungstag und Bekanntmachung des Hinweises auf die Patenterteilung: **17.04.2019**
(21) Anmeldenummer: 12000541.8
(22) Anmeldetag: 27.01.2012
(51) Int. Cl.: G01F 1/32

(54) **Vortex-Durchflussmessgerät**
Vortex flow rate measurement device
Appareil de mesure de débit à vortex

(30) Priorität: 31.01.2011 DE 102011009894
(43) Veröffentlichungstag der Anmeldung: 01.08.2012
(73) Patentinhaber: KROHNE Messtechnik GmbH, 47058 Duisburg (DE)
(72) Erfinder: Gossner, Kai, 47506 Neuukirchen-Vluyn (DE)
(74) Vertreter: Gesthuysen Patent- und Rechtsanwälte

(56) Entgegenhaltungen:
- EP-A1- 0 084 232
- EP-A2- 0 283 030
- DD-A1- 141 352
- DD-A1- 201 197
- DE-T2- 69 206 108
- JP-A- 3 277 922
- JP-A- 2001 289 677
- JP-A- 2007 071 798
- JP-A- 2011 106 989

## Beschreibung

Die Erfindung betrifft ein Vortex-Durchflussmessgerät mit einem Messrohr, einem Gehäuse, einem Störkörper und einer Sensoreinheit, wobei die Sensoreinheit zur Erfassung eines durch den Störkörper hervorgerufenen Vortex-Messsignals dient und wobei zusätzlich mindestens ein Inertialsensor zur Erfassung von auf das Vortex-Durchflussmessgerät wirkenden Störschwingungen vorgesehen ist.

Ferner betrifft die Erfindung ein Verfahren zum Betrieb eines Vortex-Durchflussmessgeräts, mit einer Sensoreinheit und mindestens einem Inertialsensor, wobei auf das Messsignal des Vortex-Durchflussmessgeräts einwirkende Störschwingungen durch Auswertung des Messsignals des Inertialsensors erkannt werden, wobei die Verarbeitung der Vortex-Messsignale zumindest teilweise durch die ausgewerteten Messsignale des Inertialsensors gesteuert wird, wobei die Vortex-Messsignale in einem adaptiven Filter verarbeitet werden und wobei die Filterparameter zumindest teilweise aus den ausgewerteten Messsignalen des Inertialsensors abgeleitet werden.

Vortex-Durchflussmessgeräte sind seit Langem bekannt, wobei das Messprinzip auf der Tatsache beruht, dass sich in einem flüssigen oder gasförmigen Medium hinter einem Störkörper, der von dem Medium umströmt wird, eine Wirbelstraße ausbilden kann, die durch sich mit der Strömung fortbewegende, sich vom Störkörper abgelöste Wirbel gebildet ist. Die Frequenz, mit der sich Wirbel von dem Störkörper ablösen, ist von der Strömungsgeschwindigkeit abhängig, wobei dieser Zusammenhang unter gewissen Voraussetzungen nahezu linear ist. Jedenfalls stellt die Messung der Wirbelfrequenz ein geeignetes Mittel zur Bestimmung der Strömungsgeschwindigkeit des Mediums dar, weshalb indirekt - unter zusätzlicher Berücksichtigung von beispielsweise Druck und Temperatur - eine Bestimmung des Messdurchflusses durch die Wirbelfrequenzmessung möglich ist. Die in einer Wirbelstraße auftretenden Wirbel des Mediums führen zu lokalen Druckschwankungen, die von der Sensoreinheit - üblicherweise einem Druckaufnehmer - detektiert werden können.

Da die Bestimmung der Strömungsgeschwindigkeit bei Vortex-Durchflussmessgeräten auf der Messung von Druckschwankungen beruht, ist die Vortex-Durchflussmessung empfindlich gegenüber Vibrationen in der Gesamtanlage, die daher die Qualität der Messergebnisse beeinflussen können.

Inertialsensoren sind üblicherweise mikroelektromechanische Systeme und bestehen aus Drehraten-, Beschleunigungs- und Magnetsensoren. Sie nutzen die Massenträgheit und/oder das Erdmagnetfeld für die Messung von Bewegung, Orientierung und Lage. Durch Kombination mehrerer Inertialsensoren in einer inertialen Messeinheit können die Beschleunigungen in den sechs Bewegungsfreiheiten (Translation in und Rotation um drei Raumachsen) gemessen werden. Wenn im Folgenden von einem Inertialsensor die Rede ist, dann ist damit stets sowohl ein einzelner Inertialsensor zur Erfassung einer einzigen Bewegungsfreiheit als auch eine Kombination verschiedener Inertialsensoren zu einer inertialen Messeinheit zur Erfassung mehrerer Bewegungsfreiheiten gemeint. Die Sensoreinheit des Vortex-Durchflussmessgeräts, die zur Erfassung des Vortex-Messsignals dient, wird auch als Pickup bezeichnet.

Der Inertialsensor ist vorteilhaft mit einer optimalen akustischen Kopplung am Vortex-Durchflussmessgerät befestigt, so dass auf das Vortex-Durchflussmessgerät einwirkende Störschwingungen von dem Inertialsensor erfasst werden können. Vorzugsweise handelt es sich bei dem verwendeten Inertialsensor um einen Beschleunigungssensor, der bezüglich einer oder mehrerer, insbesondere bezüglich drei orthogonaler Raumachsen empfindlich ist.

Die von außen auf das Vortex-Durchflussmessgerät einwirkenden Störschwingungen gehen beispielsweise von im Rohrleitungssystem arbeitenden Pumpen, Turbinen oder Ventilen und anderen Strömungsbeeinflussungen aus. Durch Auswertung der Messsignale des Inertialsensors bzw. des Beschleunigungssensors können die Vortex-Messsignale des Vortex-Durchflussmessgeräts korrigiert und bewertet werden, so dass die Qualität der Messergebnisse gesteigert werden kann.

Die Druckschrift JP 2001 289677 A offenbart ein Vortex-Durchflussmessgerät. Das Vortex-Durchflussmessgerät umfasst einen Strömungskanal, in dem stromabwärts eines ersten Störkörpers ein erster und ein zweiter Belastungssensor angeordnet sind. Die Ausgangssignale des ersten und zweiten Belastungssensors werden separat voneinander ausgewertet. Auf Basis der Ausgangssignale der beiden Sensoren werden Störschwingungen aus dem Vortex-Messsignal herausgefiltert.

Die Druckschrift JP 03277922 A offenbart ein Vortex-Durchflussmessgerät, bei dem die durch die Wirbelstraße entstehenden Druckdifferenzen mittels einer zwischen zwei Druckkammern angeordneten Membran erfasst werden. Die Frequenz der Druckdifferenzen wird mit einem Sensor erfasst. Des Weiteren werden Schwingungen des Messrohrs mit einem Beschleunigungssensor erfasst.

Die Druckschrift DD 201 197 offenbart einen Beschleunigungskompensationsfühler in einem Wirbeldurchflussmesser. Der Wirbeldurchflussmesser umfasst ein Messrohr, wobei innerhalb des Strömungskanals des Messrohrs ein Strömungswiderstandskörper angeordnet ist. Der Strömungswiderstandskörper weist einen im Wesentlichen U-förmigen Querschnitt auf, wobei innerhalb des U-förmigen Querschnitts ein federelastischer Beschleunigungsfühler zur Erfassung von Störschwingungen angeordnet ist. Stromabwärts des Strömungswiderstandskörpers ist ein Messfühler zur Erfassung der durch die Wirbel hervorgerufenen Schwingungen angeordnet. Das Messsignal des Beschleunigungsfühlers wird invertiert dem Messsignal des Messfühlers aufgeschaltet, so dass die durch den Beschleunigungsfühler erfassten Störschwingungen aus dem Messsignal entfernt werden.

Die Druckschrift EP 0 084 232 A1 offenbart eine Filterschaltung für ein Vortex-Durchflussmessgerät, mit der die Vibrationsempfindlichkeit eines derartigen Durchflussmessgeräts reduziert wird. In eine Sperrfilteranordnung gehen die Signale eines Vibrationssensors ein, wobei mittels der Filteranordnung das Vortex-Messsignal unter Verwendung eines gemittelten Signals des Vibrationssensors korrigiert wird.

Die DD 141 352 A1 beschreibt ein Vortex-Durchflussmessgerät, welches neben einer ersten Sensoreinheit in der karmannschen Wirbelstraße eine zweite Sensoreinheit außerhalb der karmannschen Wirbelstraße aufweist. Die Signale der beiden Sensoreinheiten werden einer Kompensationsschaltung zugeführt, welche gleichphasig auf beide Sensoreinheiten wirkende Beschleunigungskräfte kompensiert.

Auch aus der DE 692 06 108 T2 ist ein Vortex-Durchflussmessgerät bekannt. Dieses weist eine erste und eine zweite Sensoreinheit auf. Die erste Sensoreinheit ist stromabwärts eines Störkörpers und die zweite Sensoreinheit stromabwärts der ersten Sensoreinheit angeordnet. Die erste Sensoreinheit erfasst neben den von dem Störkörper erzeugten Wirbeln auch äußeren Störschall, wohingegen die zweite Sensoreinheit den äußeren Störschall erfasst. Eine Einrichtung des Vortex-Durchflussmessgeräts Verknüpft die Signale der Sensoreinheiten, so dass ein verknüpftes Signal einen Fluidfluss angibt, wobei die Störsignale sich aufheben.

Aus der JP 2007 071798 A ist ein Feldgerät mit einem Beschleunigungssensor auf einer Platine bekannt, wobei der Beschleunigungssensor Vibrationen misst und ein Alarm in Abhängigkeit von den gemessenen Vibrationen ausgegeben wird.

Ausgehend von dem vorgenannten Stand der Technik liegt der vorliegenden Erfindung die Aufgabe zugrunde, ein Vortex-Durchflussmessgerät und ein Verfahren zum Betrieb eines Vortex-Durchflussmessgeräts anzugeben, mit dem die Qualität der Messergebnisse weiter gesteigert wird.

Die vorgenannte Aufgabe ist bei einem gattungsgemäßen Vortex-Durchflussmessgerät gelöst, das eine Mess- und Auswerteelektronik aufweist und indem der Inertialsensor auf der Platine einer an dem Vortex-Durchflussmessgerät vorgesehenen Mess- und Auswerteelektronik vorgesehen ist. Dadurch, dass der Inertialsensor unmittelbar auf einer Platine der Mess- und Auswerteelektronik vorgesehen ist, kann dieser bereits bei Herstellung der Platine auf dieser, vorzugsweise durch einen automatisierten Prozess, befestigt und angeschlossen werden, so dass der Installationsaufwand für den Inertialsensor so gering wie möglich gehalten wird. Somit ist der Fertigungsaufwand für ein Vortex-Durchflussmessgerät reduziert. Eine Platine der Mess- und Auswerteelektronik ist üblicherweise fest mit dem Gehäuse des Vortex-Durchflussmessgeräts verbunden, so dass sich von dem Rohrleitungssystem auf das Vortex-Durchflussmessgerät einwirkende Schwingungen auch auf das Gehäuse und damit auf die Platine ausbreiten und von dem Inertialsensor erfasst werden können.

Die vorgenannte Aufgabe ist bei einem gattungsgemäßen Vortex-Durchflussmessgerät alternativ dadurch gelöst, dass der Inertialsensor an dem Gehäuse befestigt ist. Dadurch werden die Störschwingungen unmittelbar an einem mit dem Messrohr verbundenen Bauteil des Vortex-Durchflussmessgeräts abgegriffen und können zur Korrektur der Vortex-Messsignale herangezogen werden. Somit werden die auf das Vortex-Durchflussmessgerät einwirkenden Störschwingungen vorteilhaft erfasst. Der Inertialsensor ist dazu starr mit dem Gehäuse verbunden, z. B. angeschraubt oder angeklebt.

Gemäß einer bevorzugten Ausgestaltung der Erfindung ist vorgesehen, dass der Inertialsensor lediglich bezüglich bestimmter Raumachsen empfindlich ist, insbesondere bezüglich solcher Raumachsen, für die auch die Sensoreinheit des Vortex-Durchflussmessgeräts zur Durchflussmessung empfindlich ist. Diese Ausgestaltung eignet sich insbesondere für solche Vortex-Durchflussmessgeräte, bei denen der Sensor bzw. die Sensoreinheit zur Erfassung der Vortex-Messsignale lediglich bezüglich einer einzigen oder bezüglich zweier Raumachsen empfindlich ist, so dass eine Auswertung von Störschwingungen in die nicht von der Vortex-Sensoreinheit erfassten Raumrichtungen nicht erforderlich ist; der Inertialsensor, insbesondere ein Beschleunigungssensor, ist dann lediglich bezüglich der auch zur Durchflussmessung ausgewerteten Raumachsen empfindlich.

In Abhängigkeit von der Ausgestaltung des Vortex-Durchflussmessgeräts, insbesondere in Abhängigkeit von dessen Gehäuse und Messrohr, hat sich gemäß einer weiteren Ausgestaltung als vorteilhaft herausgestellt, wenn eine Mehrzahl von Inertialsensoren an verschiedenen Stellen des Vortex-Durchflussmessgeräts befestigt sind, insbesondere wobei jeder Inertialsensor jeweils nur bezüglich einer bestimmten Raumrichtung empfindlich ist. Durch die Ausgestaltung des Vortex-Durchflussmessgeräts kann es sich ergeben, dass sich die Störschwingungen in verschiedenen Bereichen des Vortex-Durchflussmessgeräts unterschiedlich stark in den verschiedenen Raumrichtungen auswirken, so dass es beispielsweise vorteilhaft ist, insbesondere an solchen Stellen, wo sich der jeweilige Schwingungsanteil besonders stark in einer bestimmten Raumrichtung auswirkt, einen Beschleunigungssensor zu installieren, der speziell diesen Schwingungsanteil erfasst.

Dabei ist beispielsweise ein Vortex-Durchflussmessgerät denkbar, an dessen Platine der Mess- und Auswerteelektronik beispielsweise ein Beschleunigungssensor angebracht ist, der in x-Richtung empfindlich ist, an dessen Gehäuse ein Beschleunigungssensor befestigt ist, der beispielsweise in y-Richtung empfindlich ist, und an dessen Messrohr ein weiterer Beschleunigungssensor befestigt ist, der in z-Richtung empfindlich ist. Selbstverständlich ist bezüglich der Wahl der Raumrichtung und der Position des Beschleunigungssensors jegliche Unterkombination denkbar. Vorgesehen ist ferner beispielsweise auch, dass sich an jeder der drei vorgenannten Positionen jeweils ein Inertialsensor befindet, der bezüglich aller drei Raumrichtungen empfindlich ist, so dass die Messsignale der drei Inertialsensoren miteinander abgeglichen werden können.

Als besonders vorteilhaft hat sich gemäß einer weiteren Ausgestaltung herausgestellt, wenn wenigstens ein Inertialsensor an dem das Vortex-Durchflussmessgerät umgebenden Rohrleitungssystem angeordnet ist. Ein solcher Inertialsensor ist beispielsweise mit einem Magneten an dem Rohrleitungssystem befestigt, jedoch weiterhin mit der Mess- und Auswerteelektronik des Vortex-Durchflussmessgeräts per Kabel oder per Funk verbunden. Auf diese Weise können die Messsignale des außerhalb angeordneten Inertialsensors weiterhin für die Auswertung der Vortex-Messsignale herangezogen werden. Vorgesehen ist außerdem, dass auf beiden Seiten des Vortex-Durchflussmessgeräts jeweils an den dortigen Enden des Rohrleitungssystems ein bezüglich aller drei Raumrichtungen empfindlicher Beschleunigungssensor angeordnet ist, so dass beispielsweise der Ursprung von Störschwingungen oder unterschiedliche Störschwingungen genauer lokalisiert werden können.

Die Erfindung betriff, wie bereits erwähnt worden ist, auch ein Verfahren zum Betreiben eines Vortex-Durchflussmessgeräts. Bei diesem Verfahren werden auf das Messsignal des Vortex-Durchflussmessgeräts einwirkende Störschwingungen durch Auswertung des Messsignals des Inertialsensors erkannt, und wird die Verarbeitung der Vortex-Messsignale zumindest teilweise durch die ausgewerteten Messsignale des Inertialsensors gesteuert. Das Messsignal des Inertialsensors bzw. die Messsignale der Inertialsensoren wird bzw. werden dazu mit geeigneten Methoden ausgewertet, um die auf das Vortex-Durchflussmessgerät einwirkenden Störschwingungen zu erkennen. Anhand einer Analyse der Messsignale des Inertialsensors, der vorzugsweise ein Beschleunigungssensor ist, können die Störschwingungen in verschiedene Schwingungskategorien eingeteilt werden, nämlich zum einen in solche Schwingungen, die aus kurzfristigen Einflüssen resultieren, beispielsweise Ventilbetätigungen, und zum anderen in solche Schwingungen, die dauerhaft und konstant vorhanden sind, beispielsweise resultierend aus an dem Rohrleitungssystem arbeitenden Pumpen und Turbinen.

In Abhängigkeit von der Art der Störschwingungen wird auf Basis der ausgewerteten Messsignale des Inertialsensors die Weiterverarbeitung der Vortex-Messsignale gesteuert. Beispielsweise werden die Vortex-Messsignale verworfen, die mit einer entsprechenden Störschwingung überlagert sind, oder die Störschwingungen werden - zumindest teilweise - durch ein vorzugsweise auf die Störschwingungen abgestimmtes Filter herausgefiltert.

Weiter werden die Vortex-Messsignale in einem adaptiven Filter verarbeitet, wobei die Filterparameter zumindest teilweise aus den ausgewerteten Messsignalen des Inertialsensors abgeleitet werden. Die Verarbeitung bzw. die Nachbearbeitung der Vortex-Messsignale ist folglich abhängig von den Eigenschaften der Messsignale des Inertialsensors. Die Parameter des adaptiven Filters werden folglich manuell oder automatisch an die Art und die Eigenschaften der entsprechenden Störschwingungen individuell angepasst, so dass stets eine vorteilhafte Filterleistung erreicht wird. Bei kurzfristigen Störungen eignet sich beispielsweise ein vollständiges Herausfiltern der entsprechenden Vortex-Messsignale, während bei langfristigen Störschwingungen ein selektives Herausfiltern der entsprechenden Störschwingungssignale erforderlich ist.

Die eingangs genannte Aufgabe ist außerdem bei einem solchen Verfahren gelöst, indem zur Parametrisierung des Filters ein Amplitudenspektrum des Messsignals des Inertialsensors gebildet wird, wobei anhand des Amplitudenspektrums Filterparameter für das adaptive Filter bestimmt werden. Anhand eines Amplitudenspektrums der durch den Inertialsensor aufgenommenen Messsignale können beispielsweise die Störschwingungen von kontinuierlich arbeitenden Turbinen und Pumpen im Messsignal erkannt werden. Das Amplitudenspektrum des Messsignals des Inertialsensors wird beispielsweise mit Hilfe der schnellen Fourier-Transformation oder der diskreten Fourier-Transformation berechnet. Dabei werden stets alle diskreten Spektralkomponenten in einem Block berechnet.

Um beispielsweise eine Energie- und/oder Speicherersparnis bei der Auswertung zu realisieren, kann beispielsweise auf einen nicht blockweise arbeitenden Algorithmus zurückgegriffen werden, da dadurch der rechnerische Aufwand reduziert wird. Dabei wird nicht das komplette Amplitudenspektrum in einem Schritt berechnet, sondern das Amplitudenspektrum Schritt für Schritt bestimmt, so dass nach einem gesamten Durchlauf ein vollständiges Amplitudenspektrum vorliegt. Als Berechnungsalgorithmen eignen sich beispielsweise die gleitende diskrete Fourier-Transformation oder ein gleitender Goertzel-Algorithmus. Mit den vorgenannten Algorithmen werden einzelne diskrete Spektralanteile berechnet, so dass sich die Berechnung frequenzselektiv durchführen lässt. Häufig treten Rohrleitungsschwingungen im niederfrequenten Bereich auf mit einer Frequenz von weniger als 50 Hz.

In diesem Zusammenhang hat sich gemäß einer Ausgestaltung des Verfahrens als besonders vorteilhaft herausgestellt, wenn in dem Amplitudenspektrum auftretende Spitzen als Parameter für das adaptive Filter verwendet werden. Die Parametrisierung des Filters erfolgt entweder manuell, indem die Filterparameter durch eine Bedienperson eingestellt werden, oder automatisch durch die Mess- und Auswerteelektronik. Als Filter für die Vortex-Messsignale eignet sich beispielsweise ein Bandsperrfilter, insbesondere ein Kerbfilter, das die anhand des Amplitudenspektrums ermittelten Frequenzen der Störschwingungen - Störfrequenzen - aus den Vortex-Messsignalen herausfiltert, so dass diese - bereinigt von den Störschwingungen - weitergeleitet werden können.

Dabei ist zu unterscheiden, ob die Störfrequenzen im Bereich der Messfrequenzen des Vortex-Messsignals liegen oder ob die Störfrequenzen außerhalb der Frequenzen der Vortex-Messsignale liegen. Störungen im Bereich der Messfrequenzen können zwar prinzipiell auch herausgefiltert werden, allerdings besteht die Gefahr, dass das Nutzsignal, nämlich die Vortex-Messsignale, dieselbe Frequenz aufweisen und so - zumindest teilweise - auch herausgefiltert werden. Sofern sich die Vortex-Messsignale und die Störschwingungen in einem zu engen Frequenzbereich überlagern, kann beispielsweise eine entsprechende Signalmeldung ausgegeben werden.

Um kurzfristige Störschwingungen, die beispielsweise durch eine Ventilbetätigung hervorgerufen werden, zu erkennen und zu klassifizieren, ist gemäß einer weiteren Ausgestaltung vorgesehen, dass zur Auswertung der Amplitudenverlauf der Messsignale des Inertialsensors bestimmt wird, und dass der Amplitudenverlauf differenziert wird, so dass plötzliche Veränderungen erkennbar sind. Aus dem amplitudenmodulierten Messsignal des Inertialsensors wird vorzugsweise mittels eines Demodulators zunächst der Amplitudenverlauf der Messsignale des Inertialsensors bestimmt, wobei anschließend der Amplitudenverlauf zeitlich differenziert wird, so dass anhand einer Auswertung des differenzierten Amplitudenverlaufs eine plötzliche Veränderung der Störschwingungen erkannt und bewertet werden kann. Eine anhand dieser Auswertung erkannte Störschwingung kann beispielsweise dazu führen, dass die zugehörigen Vortex-Messsignale durch die Mess- und Auswerteelektronik verworfen bzw. vom adaptiven Filter herausgefiltert werden. Die Vortex-Messsignale werden in diesem Fall also nicht von den Störschwingungen getrennt, sondern verworfen, da es sich ohnehin um eine lediglich kurzfristige Störung der Vortex-Messsignale handelt.

Zusätzlich oder alternativ zum Verwerfen der Vortex-Messsignale ist gemäß einer weiteren Ausgestaltung vorgesehen, dass eine Signalmeldung generiert und ausgegeben wird, die darauf hinweist, dass eine Messung beispielsweise zur Zeit nicht möglich ist. Das Verwerfen bzw. Herausfiltern der Vortex-Messsignale bzw. die Ausgabe der Signalmeldung erfolgt vorzugsweise so lange, solange das differenzierte Amplitudensignal einen vorbestimmten Schwellenwert erreicht hat, vorzugsweise überschreitet.

Des Weiteren ist gemäß einer nächsten Ausgestaltung vorgesehen, dass zur Auswertung der Amplitudenverlauf der Messsignale des Inertialsensors bestimmt wird, und dass über einen vorbestimmten Zeitraum, insbesondere einen gleitenden Zeitraum, die gemittelte Amplitude bestimmt wird. Der Amplitudenverlauf wird wiederum vorzugsweise aus dem amplitudenmodulierten Messsignal des Inertialsensors durch einen Demodulator bestimmt. Der vorbestimmte Zeitraum ist bevorzugt ein gleitender Zeitraum, d. h. das stets fortschreitende Amplitudensignal wird jeweils für einen betragsmäßig gleichen Zeitraum rückwärtig ausgewertet und gemittelt, so dass ein Wert für die gemittelte Amplitude erhalten wird. Wobei eine maßgebliche Änderung des Werts der gemittelten Amplitude ein Anzeichen für das Vorliegen einer Störschwingung ist.

Gemäß einer weiteren Ausgestaltung des Verfahrens ist vorgesehen, dass eine Signalmeldung generiert wird und/oder die Vortex-Messsignale verworfen werden, wenn die gemittelte Amplitude einen vorbestimmten Schwellenwert erreicht. Die Vortex-Messsignale werden dazu beispielsweise durch die Mess- und Auswerteelektronik verworfen bzw. durch das adaptive Filter herausgefiltert. Die optionale Signalmeldung gibt an, dass beispielsweise zum jeweiligen Zeitpunkt keine Messung von aussagekräftigen Vortex-Messsignalen möglich ist, da eine Störschwingung vorliegt. Vorzugsweise werden die Vortex-Messsignale so lange entfernt bzw. herausgefiltert, solange die gemittelte Amplitude den vorgegebenen Schwellenwert erreicht.

Vorzugsweise erfolgt die Auswertung der Messsignale des Inertialsensors gleichzeitig mit wenigstens zwei der drei vorgenannten Auswertemethoden, nämlich beispielsweise die Auswertung des Amplitudenspektrums parallel zur Auswertung des differenzierten Amplitudenverlaufs oder die Auswertung des Amplitudenspektrums parallel zur Auswertung der gemittelten Amplitude oder die Auswertung der gemittelten Amplitude parallel zur Auswertung des differenzierten Amplitudenverlaufs. Ganz bevorzugt erfolgt die Auswertung mit allen drei Auswertemethoden gleichzeitig.

Im Einzelnen gibt es nun eine Vielzahl von Möglichkeiten, das erfindungsgemäße Vortex-Durchflussmessgerät und das erfindungsgemäße Verfahren zum Betrieb eines Vortex-Durchflussmessgeräts auszugestalten und weiterzubilden. Dazu wird verwiesen sowohl auf die den Patentansprüchen 1 und 2 einerseits und Patenanspruch 6 andererseits nachgeordneten Patentansprüche als auch auf die nachfolgende Beschreibung von bevorzugten Ausführungsbeispielen in Verbindung mit der Zeichnung. In der Zeichnung zeigen:
- Fig. 1 a - d: Ausführungsbeispiele eines Durchflussmessgeräts in teilweise geschnittener Seitenansicht,
- Fig. 2: ein Ausführungsbeispiel eines Durchflussmessgeräts in teilweise geschnittener Seitenansicht,
- Fig. 3: einen Ablaufplan eines Ausführungsbeispiels eines Verfahrens zum Betrieb eines Vortex-Durchflussmessgeräts und
- Fig. 4: einen Ablaufplan eines weiteren Ausführungsbeispiels eines Verfahrens zum Betrieb eines Vortex-Durchflussmessgeräts.

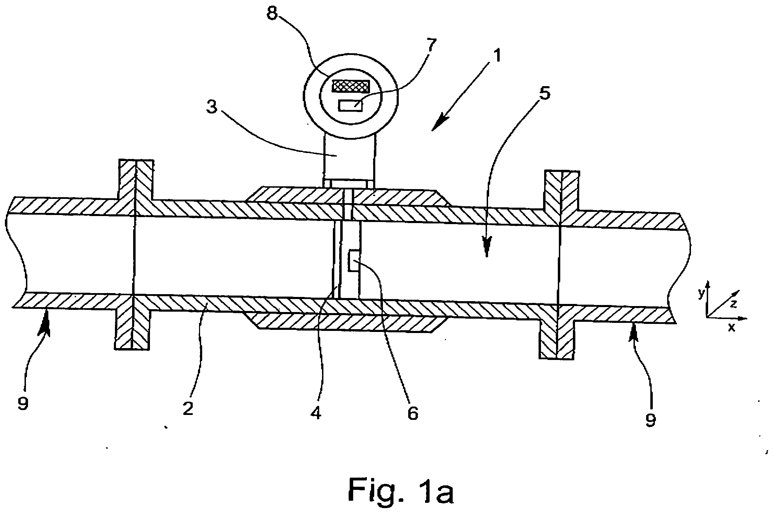

Fig. 1a bis 1d zeigen ein Vortex-Durchflussmessgerät 1 mit einem Messrohr 2 und einem Gehäuse 3. Innerhalb des Messrohrs 2 ist zentral, ein bei diesem Ausführungsbeispiel über den gesamten Durchmesser verlaufender Störkörper 4 im Strömungskanal 5 des Messrohrs 2 angeordnet. Der Störkörper 4 verursacht bei einem strömenden Medium innerhalb des Strömungskanals 5 eine Wirbelbildung an den Flanken des Störkörpers 4, wobei die Frequenz der Wirbel über eine Sensoreinheit 6 erfassbar ist und aus der Wirbelfrequenz das Vortex-Messsignal gebildet wird. Die Sensoreinheit 6 besteht bei diesem Ausführungsbeispiel aus einem Piezoelement und ist an der der Strömungsrichtung abwandten Seite des Störkörpers 4 dauerhaft an diesem befestigt.

Zur Erfassung von Störschwingungen, die auf das Vortex-Durchflussmessgerät einwirken, ist bei dem Ausführungsbeispiel gemäß Fig. 1a zusätzlich ein Inertialsensor 7 zur Erfassung dieser Störschwingungen angeordnet. Gemäß Fig. 1a ist der Inertialsensor 7 ein Beschleunigungssensor, der bezüglich drei Raumachsen empfindlich ist. Der Inertialsensor 7 ist auf einer Platine einer Mess- und Auswerteelektronik 8 angeordnet und mit dieser verbunden.

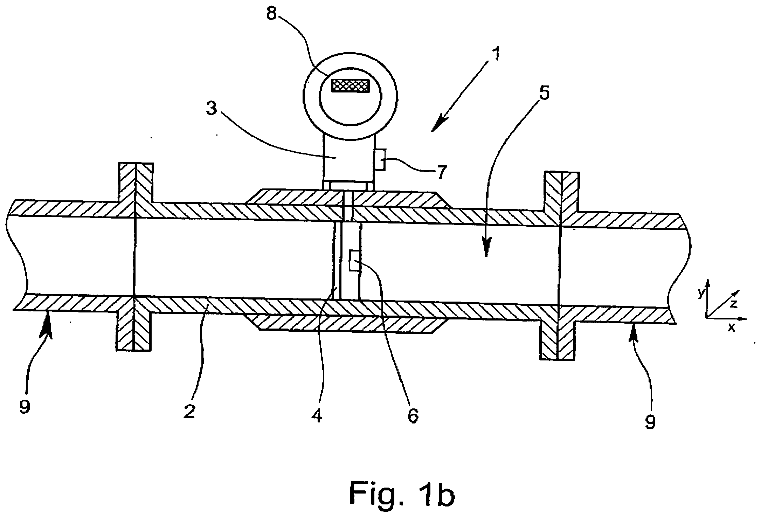

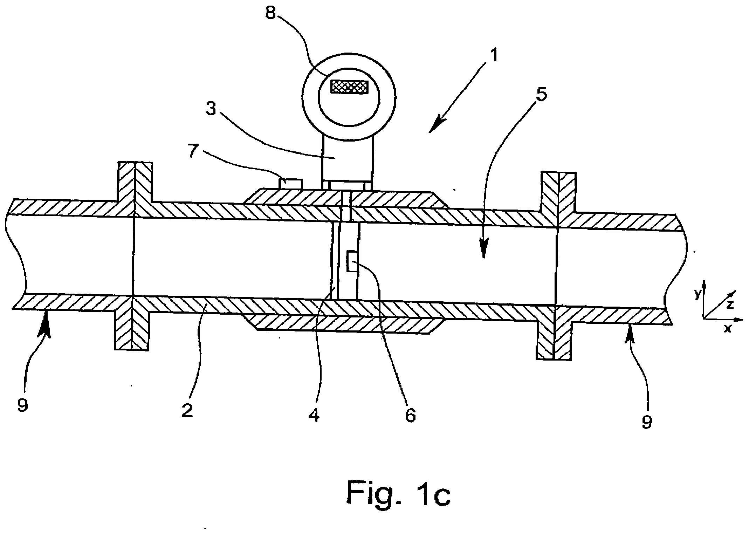

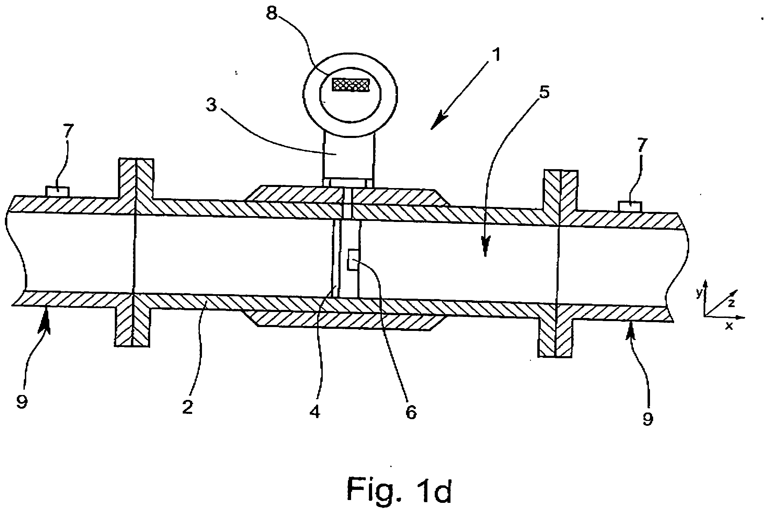

Gemäß dem Ausführungsbeispiel der Fig. 1b ist der Inertialsensor 7 an dem Gehäuse 3 des Vortex-Durchflussmessgeräts 1 befestigt. Bei dem Ausführungsbeispiel gemäß Fig. 1c ist der Inertialsensor 7 am Messrohr 2 des Vortex-Durchflussmessgeräts 1 befestigt. Bei dem Ausführungsbeispiel gemäß Fig. 1d sind zwei Inertialsensoren 7 vorgesehen, wobei jeweils ein Inertialsensor 7 auf einer Seite des Vortex-Durchflussmessgeräts 1 an dem umgebenden Rohrleitungssystem 9 befestigt ist.

Die Inertialsensoren 7 sind bei allen vier Ausführungsbeispielen gemäß den Fig. 1a bis 1d bezüglich aller drei Raumachsen empfindlich, so dass eine ausführliche Auswertung der auf das Vortex-Durchflussmessgerät 1 wirkenden Störschwingungen möglich ist. Ferner sind sämtliche Inertialsensoren 7 mit der Mess- und Auswerteelektronik 8 des Vortex-Durchflussmessgeräts 1 verbunden, so dass die Messsignale der Inertialsensoren 7 dort auswertbar sind. Des Weiteren ist auch die Sensoreinheit 6 des Vortex-Durchflussmessgeräts 1 stets zur Übertragung der Messsignale mit der Mess- und Auswerteelektronik 8 verbunden.

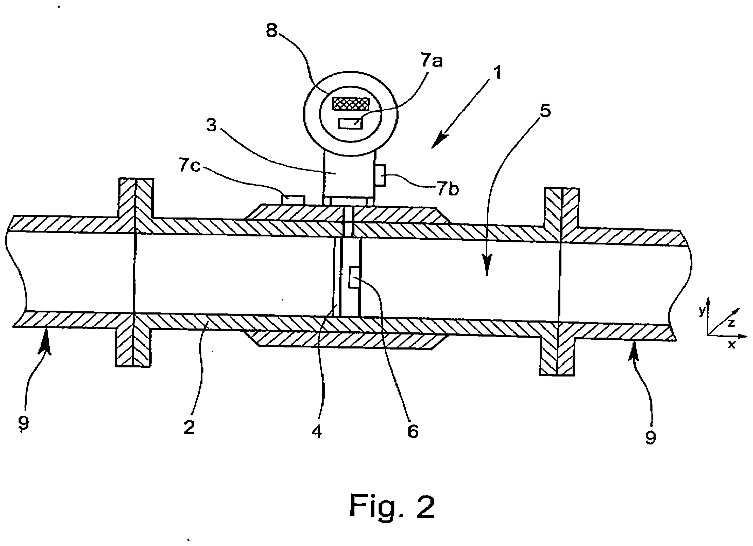

Fig. 2 zeigt ein weiteres Ausführungsbeispiel eines Vortex-Durchflussmessgeräts 1, dass bezüglich der grundsätzlichen Ausgestaltung im Wesentlichen den Ausführungsbeispielen gemäß den Fig. 1a bis 1d entspricht, wobei bei diesem Ausführungsbeispiel drei Inertialsensoren 7a, 7b, 7c an drei unterschiedlichen Positionen am Vortex-Durchflussmessgerät 1 angeordnet sind, nämlich an einer Platine der Mess- und Auswerteelektronik 8 ein erster Inertialsensor 7a, an dem Gehäuse 3 ein zweiter Inertialsensor 7b und an dem Messrohr 2 ein dritter Inertialsensor 7c. Die Inertialsensoren 7a, 7b, 7c sind jeweils nur für eine Raumrichtung empfindlich, wobei der Inertialsensor 7a für die z-Richtung z, der Inertialsensor 7b für die y-Richtung y und der Inertialsensor 7c für die x-Richtung empfindlich ist. Die drei Messsignale der Inertialsensoren 7a, 7b, 7c werden zusammengefasst und gemeinsam von der Mess- und Auswerteelektronik 8 ausgewertet. Die getrennte Anordnung der Inertialsensoren 7a, 7b, 7c hat den Vorteil, dass jeder der Inertialsensoren 7a, 7b, 7c an einer Position angeordnet ist, die bezüglich der Erfassung von Störschwingungen für seine jeweilige Raumrichtung optimal ist.

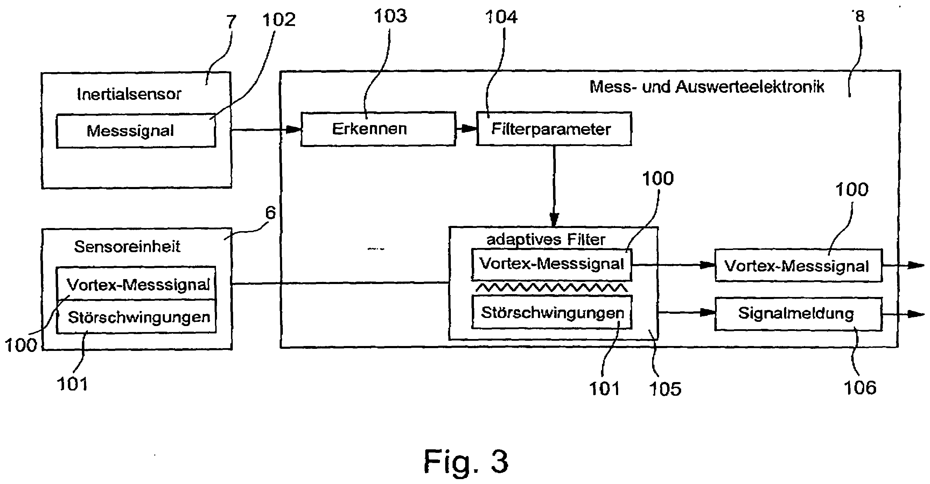

Fig. 3 zeigt ein Ausführungsbeispiel eines Ablaufdiagramms für ein Verfahren zum Betrieb eines Vortex-Durchflussmessgeräts. Im Betrieb des Vortex-Durchflussmessgeräts wird mit der Sensoreinheit 6 das Vortex-Messsignal 100 in Überlagerung mit den Störschwingungen 101 erfasst. Gleichzeitig erfasst der Inertialsensor 7 separat das Messsignal 102, das im Wesentlichen den Störschwingungen 101 entspricht. Nachdem die Messsignale 102 durch den Inertialsensor 7 erfasst sind, erfolgt das Erkennen 103 der Art der Störschwingung 101 aus dem Messsignal 102, so dass in Abhängigkeit von der Art der Störschwingung 101 die entsprechenden Filterparameter 103 abgeleitet werden können.

Die Filterparameter 104 dienen der Parametrisierung eines adaptiven Filters 105, das auf Basis der Filterparameter 104, die aus den Messsignalen 102 und damit aus den Störschwingungen 101 erhalten worden sind, das Vortex-Messsignal 100 von den Störschwingungen 101 trennt und anschließend das bereinigte Vortex-Messsignal 100 ausgibt. Bei lediglich kurzfristig auftretenden Störschwingungen 101 werden die Vortex-Messsignale 100 selbst vorzugsweise verworfen bzw. vollständig herausgefiltert, so dass beispielsweise lediglich eine Signalmeldung 106 ausgegeben wird, die besagt, dass aufgrund der Störschwingungen 101 keine Ausgabe von Vortex-Messsignalen 100 möglich ist.

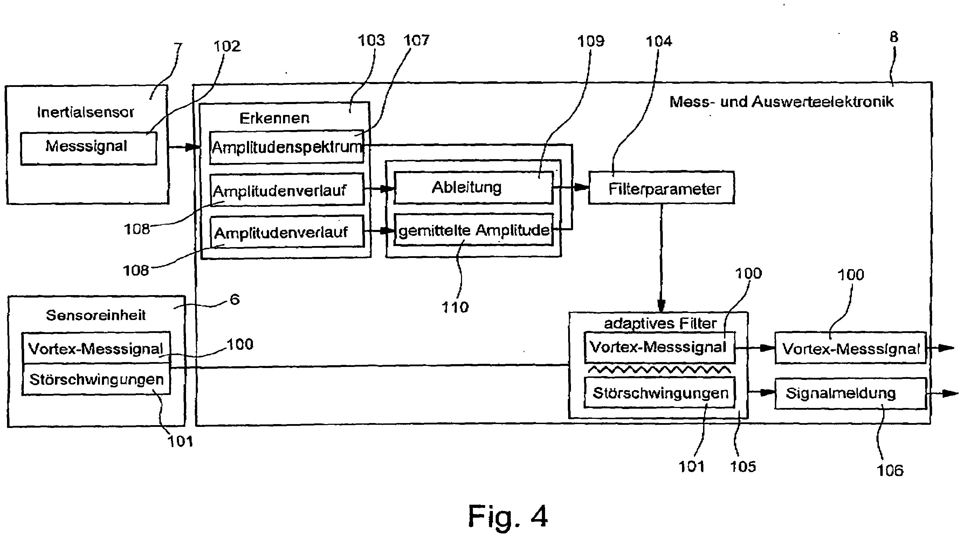

Der Ablaufplan gemäß Fig. 4, der ein weiteres Ausführungsbeispiel eines Verfahrens zum Betrieb eines Vortex-Durchflussmessgeräts zeigt, entspricht im Wesentlichen dem Ablaufplan gemäß Fig. 3, wobei das Erkennen 103 in zumindest zwei gleichzeitig verlaufende Auswerteabläufe unterteilt ist. Zum einen wird ein Amplitudenspektrum 107 des von dem Inertialsensor 7 erfassten Messsignals 102 gebildet, wobei aus dem Amplitudenspektrum 107 Filterparameter 104 abgeleitet werden. Insbesondere handelt es sich bei den aus dem Amplitudenspektrum 107 abgeleiteten Filterparametern 104 um die entsprechenden Filterfrequenzen für einen Kerbfilter, die aus im Amplitudenspektrum 107 aufgetretenen Spitzen abgeleitet werden.

Des Weiteren wird der Amplitudenverlauf 108 der durch den Inertialsensor 7 erfassten Messsignale 102 gebildet. Nachfolgend wird der Amplitudenverlauf 108 differenziert, wobei die Ableitung 109 das Erkennen von plötzlichen Veränderungen der Messsignale 102 und damit der Störschwingungen 101 ermöglicht. Bei einer sprunghaften, aus der Ableitung 109 erkennbaren Veränderung der Messsignale 102, wird beispielsweise bei Überschreiten eines vorgegebenen Schwellenwertes durch die Ableitung 109 ein entsprechender Filterparameter 104 gebildet, der die zugehörigen Vortex-Messsignale 100 vollständig herausfiltert, solange die Ableitung 109 den vorbestimmten Schwellenwert überschreitet.

Ferner wird über einen vorbestimmten Zeitraum aus dem Amplitudenverlauf 108 eine gemittelte Amplitude 110 gebildet. Sofern die gemittelte Amplitude 110 einen vorbestimmten Schwellenwert überschreitet oder einer wesentlichen Veränderung unterliegt, wird daraus ein weiterer Filterparameter 104 abgeleitet, der die entsprechenden Vortex-Messsignale 100 vorzugsweise vollständig herausfiltert. Bei vollständigem Herausfiltern der Vortex-Messsignale 100, z. B. durch einen aus der Ableitung 109 oder einen aus der gemittelten Amplitude 110 bestimmten Filterparameter 104, wird vorzugsweise auch eine Signalmeldung 106 ausgegeben, die besagt dass zum entsprechenden Zeitpunkt keine Ausgabe von Vortex-Messsignalen 100 möglich ist.

## Patentansprüche

1. Vortex-Durchflussmessgerät (1) mit einem Messrohr (2), einem Gehäuse (3), einem Störkörper (4) und einer Sensoreinheit (6), wobei die Sensoreinheit (6) zur Erfassung eines durch den Störkörper (4) hervorgerufenen Vortex-Messsignals dient, wobei zusätzlich mindestens ein Inertialsensor (7) zur Erfassung von auf das Vortex-Durchflussmessgerät (1) wirkenden Störschwingungen vorgesehen ist wobei das Vortex-Durchflussmessgerät (1) eine Mess- und Auswerteelektronik (8) aufweist,
**dadurch gekennzeichnet,**
**dass** der Inertialsensor (7) auf einer Platine der an dem Vortex-Durchflussmessgerät (1) vorgesehenen Mess- und Auswerteelektronik (8) vorgesehen ist.

2. Vortex-Durchflussmessgerät (1) mit einem Messrohr (2), einem Gehäuse (3), einem Störkörper (4) und einer Sensoreinheit (6), wobei die Sensoreinheit (6) zur Erfassung eines durch den Störkörper (4) hervorgerufenen Vortex-Messsignals dient, wobei zusätzlich mindestens ein Inertialsensor (7) zur Erfassung von auf das Vortex-Durchflussmessgerät (1) wirkenden Störschwingungen vorgesehen ist,
**dadurch gekennzeichnet,**
**dass** der Inertialsensor (7) an dem Gehäuse (3) befestigt ist.

3. Vortex-Durchflussmessgerät (1) nach Anspruch 1 oder 2, **dadurch gekennzeichnet, dass** der Inertialsensor (7) lediglich bezüglich bestimmter Raumachsen (x, y, z) empfindlich ist, insbesondere bezüglich solcher Raumachsen (x, y, z), für die auch die Sensoreinheit (6) des Vortex-Durchflussmessgeräts (1) zur Durchflussmessung empfindlich ist.

4. Vortex-Durchflussmessgerät (1) nach einem der Ansprüche 1 bis 3, **dadurch gekennzeichnet, dass** eine Mehrzahl von Inertialsensoren (7a, 7b, 7c) an verschiedenen Stellen des Vortex-Durchflussmessgeräts (1) befestigt sind, insbesondere wobei jeder Inertialsensor (7a, 7b, 7c) jeweils nur bezüglich einer bestimmten Raumrichtung (x, y, z) empfindlich ist.

5. Vortex-Durchflussmessgerät (1) nach einem der Ansprüche 1 bis 4, **dadurch gekennzeichnet**, das wenigstens ein Inertialsensor (7) an dem das Vortex-Durchflussmessgerät (1) umgebenden Rohrleitungssystem (9) angeordnet ist.

6. Verfahren zum Betrieb eines Vortex-Durchflussmessgeräts, mit einer Sensoreinheit (6), und mindestens einem Inertialsensor (7), nach einem der Ansprüche 1 bis 5, wobei auf das Messsignal (100) des Vortex-Durchflussmessgeräts einwirkende Störschwingungen (101) durch Auswertung des Messsignals (102) des Inertialsensors (7) erkannt werden, wobei die Verarbeitung der Vortex-Messsignale (100) zumindest teilweise durch die ausgewerteten Messsignale (102) des Inertialsensors (7) gesteuert wird, wobei die Vortex-Messsignale (100) in einem adaptiven Filter (105) verarbeitet werden, und wobei die Filterparameter (104) zumindest teilweise aus den ausgewerteten Messsignalen (102) des Inertialsensors (7) abgeleitet werden,
**dadurch gekennzeichnet,**
**dass** ein Amplitudenspektrum (107) des Messsignals (102) des Inertialsensors gebildet wird, wobei anhand des Amplitudenspektrums (107) Filterparameter (104) für das adaptive Filter (105) bestimmt werden.

7. Verfahren nach Anspruch 6, **dadurch gekennzeichnet, dass** in dem Amplitudenspektrum (107) auftretende Spitzen als Filterparameter (104) für das adaptive Filter (105) verwendet werden.

8. Verfahren nach Anspruch 6 oder 7, **dadurch gekennzeichnet, dass** zur Auswertung der Amplitudenverlauf (108) der Messsignale (102) des Inertialsensors (7) bestimmt wird, und dass der Amplitudenverlauf (108) differenziert wird, so dass plötzliche Veränderungen erkennbar sind.

9. Verfahren nach einem der Ansprüche 6 bis 8, **dadurch gekennzeichnet, dass** zur Auswertung der Amplitudenverlauf (108) der Messsignale (102) des Inertialsensors (7) bestimmt wird, und dass über einen vorbestimmten Zeitraum, insbesondere einen gleitenden Zeitraum, die gemittelte Amplitude (110) bestimmt wird.

10. Verfahren nach Anspruch 8, **dadurch gekennzeichnet, dass** eine Signalmeldung (106) generiert wird und/oder die Vortex-Messsignale (100) verworfen werden, wenn der differenzierte Amplitudenverlauf (109) einen vorbestimmten Schwellenwert erreicht.

11. Verfahren nach Anspruch 9, **dadurch gekennzeichnet, dass** eine Signalmeldung (106) generiert wird und/oder die Vortex-Messsignale (100) verworfen werden, wenn die gemittelte Amplitude (110) einen vorbestimmten Schwellenwert erreicht.

## Claims

1. Vortex flowmeter (1) having a measuring tube (2), a housing (3), a bluff body (4) and a sensor unit (6), wherein the sensor unit (6) is used to detect a vortex measurement signal caused by the bluff body (4), wherein at least one inertial sensor (7) is additionally provided for detecting disturbing oscillations acting on the vortex flowmeter (1), wherein the vortex flowmeter (1) has a measuring and evaluation electronics (8)
**characterized in**
**that** the inertial sensor (7) is provided on a circuit board of the electronic measuring and evaluation electronics (8) provided on the vortex flowmeter (1).

2. Vortex flowmeter (1) having a measuring tube (2), a housing (3), a bluff body (4) and a sensor unit (6), wherein the sensor unit (6) is used to detect a vortex measurement signal caused by the bluff body (4), wherein at least one inertial sensor (7) is additionally provided for detecting disturbing oscillations acting on the vortex flowmeter (1),
**characterized in**
**that** the inertial sensor (7) is attached to the housing (3).

3. Vortex flowmeter (1) according to claim 1 or 2, **characterized in that** the inertial sensor (7) is sensitive only with respect to certain spatial axes (x, y, z), in particular with respect to those spatial axes (x, y, z) to which the sensor unit (6) of the vortex flowmeter (1) for flow measurement is also sensitive.

4. Vortex flowmeter (1) according to any one of claims 1 to 3, **characterized in that** a plurality of inertial sensors (7a, 7b, 7c) are attached at different locations of the vortex flowmeter (1), in particular wherein each inertial sensor (7a, 7b, 7c) is sensitive only to a particular spatial direction (x, y, z).

5. Vortex flowmeter (1) according to any one of claims 1 to 4, **characterized in that** at least one inertial sensor (7) is arranged on the piping system (9) surrounding the vortex flowmeter (1).

6. Method for operating a vortex flowmeter, having a sensor unit (6) and at least one inertial sensor (7) according to any one of claims 1 to 5, wherein disturbing oscillations (101) acting on the measurement signal (100) of the vortex flowmeter are detected by evaluating the measurement signal (102) of the inertial sensor (7), wherein the processing of the vortex measurement signals (100) is at least partially controlled by the evaluated measurement signals (102) of the inertial sensor (7), wherein the vortex measurement signals (100) are processed in an adaptive filter (105), and wherein the filter parameters (104) are derived at least partially from the evaluated measurement signals (102) of the inertial sensor (7),
**characterized in**
**that** an amplitude spectrum (107) of the measurement signal (102) of the inertial sensor is formed, wherein filter parameters (104) for the adaptive filter (105) are determined using the amplitude spectrum (107).

7. Method according to claim 6, **characterized in that** peaks occurring in the amplitude spectrum (107) are used as filter parameters (104) for the adaptive filter (105).

8. Method according to claim 6 or 7, **characterized in that** the amplitude curve (108) of the measurement signals (102) of the inertial sensor (7) is determined for evaluation, and **in that** the amplitude profile (108) is differentiated so that sudden changes can be detected.

9. Method according to any one of claims 6 to 8, **characterized in that** the amplitude curve (108) of the measurement signals (102) of the inertial sensor (7) is determined for evaluation, and that the averaged amplitude (110) is determined over a predetermined time period, in particular a sliding time period.

10. Method according to claim 8, **characterized in that** a signal message (106) is generated and/or the vortex measurement signals (100) are discarded when the differentiated amplitude curve (109) reaches a predetermined threshold value.

11. Method according to claim 9, **characterized in that** a signal message (106) is generated and/or the vortex measurement signals (100) are discarded when the averaged amplitude (110) reaches a predetermined threshold value.

## Revendications

1. Débitmètre à vortex (1), comprenant un tube de mesure (2), un boîtier (3), un corps perturbateur (4) et une unité de détection (6), l'unité de détection (6) servant à détecter un signal de mesure de vortex produit par le corps perturbateur (4), au moins un capteur inertiel (7) étant en plus présent pour la détection d'oscillations parasites qui agissent sur le débitmètre à vortex (1), le débitmètre à vortex (1) présentant une électronique de mesure et d'interprétation (8),
**caractérisé en ce**
**que** le capteur inertiel (7) se trouve sur une platine de l'électronique de mesure et d'interprétation (8) présente dans le débitmètre à vortex (1).

2. Débitmètre à vortex (1), comprenant un tube de mesure (2), un boîtier (3), un corps perturbateur (4) et une unité de détection (6), l'unité de détection (6) servant à détecter un signal de mesure de vortex produit par le corps perturbateur (4), au moins un capteur inertiel (7) étant en plus présent pour la détection d'oscillations parasites qui agissent sur le débitmètre à vortex (1),
**caractérisé en ce**
**que** le capteur inertiel (7) est fixé au boîtier (3).

3. Débitmètre à vortex (1) selon la revendication 1 ou 2, **caractérisé en ce que** le capteur inertiel (7) est seulement sensible en référence à certains axes de l'espace (x, y, z), notamment en référence aux axes de l'espace (x, y, z) pour lesquels l'unité de détection (6) du débitmètre à vortex (1) est également sensible par rapport au sens de l'écoulement.

4. Débitmètre à vortex (1) selon l'une des revendications 1 à 3, **caractérisé en ce qu'**une pluralité de capteurs inertiels (7a, 7b, 7c) sont fixés en différents endroits du débitmètre à vortex (1), chaque capteur inertiel (7a, 7b, 7c) étant notamment à chaque fois sensible uniquement par rapport à une direction spatiale (x, y, z) définie.

5. Débitmètre à vortex (1) selon l'une des revendications 1 à 4, **caractérisé en ce qu'**au moins un capteur inertiel (7) est disposé sur le système de conduites (9) qui entoure le débitmètre à vortex (1).

6. Procédé pour faire fonctionner un débitmètre à vortex, comprenant une unité de détection (6) et au moins un capteur inertiel (7) selon l'une des revendications 1 à 5, des oscillations parasites (101) qui agissent sur le signal de mesure (100) du débitmètre à vortex étant reconnues par interprétation du signal de mesure (102) du capteur inertiel (7), le traitement des signaux de mesure de vortex (100) étant au moins partiellement commandé par les signaux de mesure (102) interprétés du capteur inertiel (7), les signaux de mesure de vortex (100) étant traités dans un filtre adaptatif (105) et les paramètres de filtrage (104) étant au moins partiellement dérivés des signaux de mesure (102) interprétés du capteur inertiel (7),
**caractérisé en ce**
**qu'**un spectre d'amplitude (107) du signal de mesure (102) du capteur inertiel est formé, les paramètres de filtrage (104) pour le filtre adaptatif (105) étant définis à l'aide du spectre d'amplitude (107).

7. Procédé selon la revendication 6, **caractérisé en ce que** des pointes survenant dans le spectre d'amplitude (107) sont utilisées comme paramètres de filtrage (104) pour le filtre adaptatif (105).

8. Procédé selon la revendication 6 ou 7, **caractérisé en ce que** le tracé de l'amplitude (108) des signaux de mesure (102) du capteur inertiel (7) est défini en vue de l'interprétation, et **en ce que** le tracé de l'amplitude (108) est différencié de manière à pouvoir reconnaître les variations brusques.

9. Procédé selon l'une des revendications 6 à 8, **caractérisé en ce que** le tracé de l'amplitude (108) des signaux de mesure (102) du capteur inertiel (7) est défini en vue de l'interprétation, et **en ce que** l'amplitude moyenne (110) est définie sur une période prédéterminée, notamment une période glissante.

10. Procédé selon la revendication 8, **caractérisé en ce qu'**un message de signalement (106) est généré et/ou les signaux de mesure de vortex (100) sont rejetés lorsque le tracé de l'amplitude différencié (109) atteint une valeur de seuil prédéterminée.

11. Procédé selon la revendication 9, **caractérisé en ce qu'**un message de signalement (106) est généré et/ou les signaux de mesure de vortex (100) sont rejetés lorsque l'amplitude moyenne (110) atteint une valeur de seuil prédéterminée.
